# EUROPEAN PATENT SPECIFICATION

(11) **EP 4 261 100 B1**
(45) Date of publication and mention of the grant of the patent: **23.09.2026**
(21) Application number: 20964895.5
(22) Date of filing: 24.12.2020
(51) Int. Cl.: B61F 5/52

(54) **BOGIE SIDE BEAM, BOGIE, AND RAILWAY VEHICLE**
DREHGESTELLSEITENTRÄGER, DREHGESTELL UND SCHIENENFAHRZEUG
POUTRE LATÉRALE DE BOGIE, BOGIE ET VÉHICULE FERROVIAIRE

(30) Priority: 09.12.2020 CN 202011425894
(43) Date of publication of application: 18.10.2023
(73) Proprietor: CRRC TANGSHAN CO., LTD., Fengrun District Tangshan Hebei 063035 (CN)
(72) Inventor: QIN, Chengwei, Tangshan Hebei 063035 (CN); ZHANG, Wenzhao, Tangshan Hebei 063035 (CN); CHU, Bogang, Tangshan Hebei 063035 (CN); LI, Xudong, Tangshan Hebei 063035 (CN); LV, Shaopeng, Tangshan Hebei 063035 (CN); CHEN, Cuimei, Tangshan Hebei 063035 (CN)
(74) Representative: dompatent
(86) International application number: PCT/CN2020/138956
(87) International publication number: WO 2022/120966

(56) References cited:
- EP-A1- 0 983 922
- CN-A- 107 532 671
- CN-A- 112 519 818
- CN-A- 112 519 819
- CN-A- 112 519 820
- CN-A- 112 519 821
- CN-A- 112 519 824
- CN-A- 112 519 825
- CN-A- 112 519 826
- CN-A- 112 519 827
- CN-A- 112 537 334
- CN-A- 112 550 340
- CN-U- 205 769 309
- CN-Y- 201 296 253
- US-A1- 2012 279 416
- US-A1- 2015 000 553
- US-A1- 2020 317 233

## Description

### TECHNICAL FIELD

The present disclosure relates to railway vehicle operation technology, more particularly a sidebeam, a bogie frame, and a railway vehicle.

### BACKGROUND

Railway vehicle is an important transportation connecting cities and has gradually become the main transportation in cities. Railway vehicle is also the main carrier for cargo transportation. The railway vehicle mainly includes a car body and a bogie frame disposed below the car body. The bogie frame is employed to carry the load on the car body and realize running and steering functions.

The bogie frame includes a frame, a wheelset, a traction device, a buffer device and other structures, in which the frame includes two sidebeams extended along the longitudinal direction of the vehicle and a crossbeam connecting the two sidebeams, and the connection between the crossbeam and the sidebeam can have varies types. After studying various types of bogie frames, technicians find that there are some technical defects in conventional bogie frames, such as large dead weight, which leads to large wheelset force, large wheel-rail wear, and large noise. The rigid connection of the frame leads to poor vibration reduction ability, which leads to large vibration and poor riding comfort. The wheel unloading rate is large, and the vehicle has a large derailment risk when passing through the concave rail, thereby low safety. Poor anti-rollover ability makes the carriage prone to rollover, insufficient vertical buffering ability leads to poor vibration of the carriage, and poor riding comfort, high dead weight leads to low traction efficiency, and unreasonable installation layout of components leads to low assembly efficiency. US2012/279416A1 discloses a railcar bogie including: a cross beam configured to support a carbody; a pair of front and rear axles respectively provided on front and rear sides of the cross beam so as to extend along a crosswise direction; bearings respectively provided on both crosswise-direction sides of each of the axles and configured to rotatably support the axles; bearing accommodating portions configured to respectively accommodate the bearings; and plate springs extending in a front-rear direction so as to be respectively supported by both crosswise-direction end portions of the cross beam, end portions of each of the plate springs being respectively supported by the bearing accommodating portions. Each of the bearing accommodating portions includes a case portion configured to accommodate the bearing; and supporting portions configured to support the plate springs. The plate springs are supported by the supporting portions on a center side of the axle in the front-rear direction.

### SUMMARY

The embodiment of the present disclosure provides a sidebeam of a bogie frame, a bogie frame, and a railway vehicle.

A first aspect of an embodiment of the present disclosure provides a sidebeam of a bogie frame including:
a main sidebeam plate made of elastic composite fiber material;
an auxiliary sidebeam plate made of elastic composite fiber material and stacked above the main sidebeam plate, a middle bottom surface of the auxiliary sidebeam plate in contact with a top surface of the main sidebeam plate, and a buffer gap being formed between the bottom surfaces of two ends of the auxiliary sidebeam plate and the top surface of the main sidebeam plate;
an elastic stopper disposed on the ends of the auxiliary sidebeam plate and located in the buffer gap, in a case where the middle portion of the sidebeam bears a first vertical load, a gap is formed between the elastic stopper and the top surface of the main sidebeam plate, in a case where the middle portion of the sidebeam bears a second vertical load, an elastic deformation is formed between the main sidebeam plate and the auxiliary sidebeam plate until the elastic stopper in contact with the top surface of the main sidebeam plate, and the second vertical load is larger than the first vertical load, and the first vertical load and the second vertical load are from the auxiliary sidebeam plate to press downwardly.

A second aspect of the embodiment of the present disclosure provides a bogie frame comprising:
a sidebeam as described above.

A third aspect of an embodiment of the present disclosure provides a railway vehicle including a bogie frame as described above.

According to the technical solution provided by the embodiment of the present disclosure, the main sidebeam plate and the auxiliary sidebeam plate are stacked, the auxiliary sidebeam plate is located above the main sidebeam plate, the middle portion of the auxiliary sidebeam plate is in contact with the main sidebeam plate, the two ends of the auxiliary sidebeam plate are suspended, there is a buffer gap between the main sidebeam plate and the two ends of the auxiliary sidebeam plate, and the elastic stopper is disposed on the end of the auxiliary sidebeam plate and is located in the buffer gap; in a case where the sidebeam is subjected to a small first vertical load, only the main sidebeam plate has elastic deformation, and the elastic stopper is in contact with the main sidebeam plate, and at this time, the main sidebeam plate provides support stiffness; in a case where the sidebeam is subjected to a larger second vertical load, the auxiliary sidebeam plate moves down until the elastic stopper to contact with the main sidebeam plate, so that the main sidebeam plate and the auxiliary sidebeam plate jointly provide support stiffness, so that the sidebeam can provide different support stiffness, meet the requirements of different loads of vehicles, and improve riding comfort.

### BRIEF DESCRIPTION OF THE DRAWINGS

The drawings illustrated herein serve to provide a further understanding of and constitute a part of this present disclosure, and the illustrative embodiments of this present disclosure and the description thereof are used to explain this present disclosure and are not unduly limiting. In the drawings:
Fig. 1 is a perspective view of a sidebeam provided by an embodiment of the present disclosure.
Fig. 2 is a front view of the sidebeam provided by the embodiment of the present disclosure.
Fig. 3 is another front view of the sidebeam provided by the embodiment of the present disclosure.
Fig. 4 is a schematic view of the sidebeam provided in the embodiment bearing a first vertical load.
Fig. 5 is a schematic view of the sidebeam provided in the embodiment bearing a second vertical load.
Fig. 6 is a perspective view of a crossbeam provided by the embodiment of the present disclosure.
Fig. 7 is a perspective view of a crossbeam single-structure provided by the embodiment of the present disclosure.
Fig. 8 is a sectional view of the crossbeam provided by the embodiment of the present disclosure.
Fig. 9 is an enlarged partial view of Area A in Fig. 8.
Fig. 10 is an explosive view of two crossbeam single-structures connected provided by the embodiment of the present disclosure.
Fig. 11 is a structural schematic view of the crossbeam, the sidebeam, and the secondary suspension mounting seat of the bogie frame provided by the embodiment of the present disclosure.
Fig. 12 is an explosive view of the crossbeam, the sidebeam, and the secondary suspension mounting seat of the bogie frame provided by the embodiment of the present disclosure.
Fig. 13 is a top perspective view of the secondary suspension mounting seat provided by the embodiment of the present disclosure.
Fig. 14 is a bottom perspective view of the secondary suspension mounting seat provided by the embodiment of the present disclosure.
Fig. 15 is a partial sectional view of the assembly of the secondary suspension mounting seat, the sidebeam, and the crossbeam provided by the embodiment of the present disclosure.
Fig. 16 is a structural schematic view of the bogie frame provided by the embodiment of the present disclosure in which a secondary suspension device is disposed.
Fig. 17 is a structural schematic view of the secondary suspension mounting seat provided by the embodiment of the present disclosure, which is connected to the traction motor through the motor balancing link.
Fig. 18 is a structural schematic view of the bogie frame provided by the embodiment of the present disclosure.
Fig. 19 is a structural schematic view of a wheelset of the bogie frame provided by the embodiment of the present disclosure.
Fig. 20 is a partial schematic view of the bogie frame provided by the embodiment of the present disclosure with a safety stopper device.
Fig. 21 is a sectional view of the bogie frame provided by the embodiment of the present disclosure with the safety stopper device.
Fig. 22 is a structural schematic view of the safety stopper device provided by the embodiment of the present disclosure.
Fig. 23 is an explosive view of the assembly of the safety stopper, the primary suspension, and the shaft box provided by the embodiment of the present disclosure.

### REFERENCES IN THE DRAWINGS:

1-sidebeam; 11-main sidebeam plate; 111-main plate middle section; 112-main plate transition section; 113-main plate connection section; 12-auxiliary sidebeam plate; 121-auxiliary plate middle section; 122-auxiliary plate transition section; 123-auxiliary plate connection section; 13-elastic stopper; 14-buffer gap; 15-first sidebeam positioning pin; 16-second sidebeam positioning pin; 17-third sidebeam positioning pin; 18-positioning metal member;
2-crossbeam; 21-crossbeam main body; 210-first pin hole; 211-sidebeam positioning pin hole; 212-secondary mounting platform; 2121-secondary bolt hole; 2122-secondary positioning hole; 22-crossbeam connecting arm; 23-crossbeam connecting pin; 24-crossbeam connecting flange; 25-crossbeam connecting joint; 26-crossbeam connecting gasket; 27-crossbeam mounting ring; 28-crossbeam connecting bolt;
3-wheelset; 31-shaft; 32-wheel; 33-shaft box; 331-primary positioning hole; 332-limiting recess;
4-primary suspension device; 41-primary suspension mounting seat; 411-lower mounting seat; 412-upper mounting seat; 42-primary suspension; 43-wheelset lift; 431-limiting stopper protrusion; 432-connecting arm; 441-lower pad plate; 442-upper pad plate;
5-safety stopper device; 51-safety stopper seat; 52-safety stopper;
8-secondary suspension mounting seat; 81-mounting seat top plate; 82-mounting seat side plate; 83-mounting seat connecting portion; 84-mounting seat bolt hole; 85-mounting seat positioning protrusion; 86-sidebeam positioning counterbore; 871-lower transition plate; 872-upper transition plate; 88-secondary mounting portion; 89-motor mounting portion; 810-air spring;
91-traction motor; 92-motor balancing link.

### DETAILED DESCRIPTION OF THE EMBODIMENTS

In order to clarify the technical solutions and advantages of the embodiments of the present disclosure, the following further detailed description of the exemplary embodiments of the present disclosure is given in conjunction with the accompanying drawings, and it is apparent that the described embodiments are only a part of the embodiments of the present disclosure, and are not exhaustive of all embodiments. It should be noted that the embodiments in the present disclosure and the features in the embodiments can be combined with each other without conflict.

The embodiment provides a sidebeam which can be adapted for a bogie frame for a railway vehicle, which can be a diesel locomotive or an electric locomotive, an EMU train, a subway, a light rail or a tram, etc., and can be a passenger vehicle or a freight vehicle.

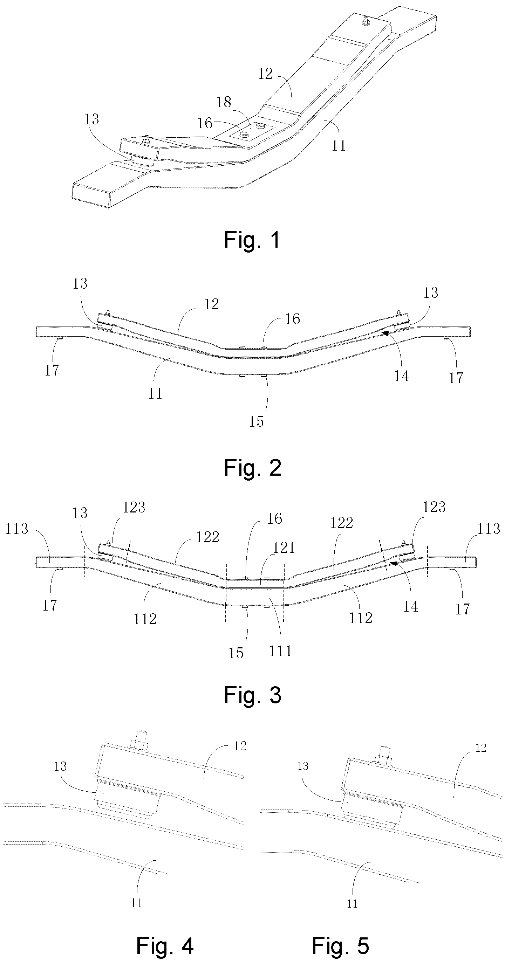

Fig. 1 is a perspective view of a sidebeam provided by an embodiment of the present disclosure. Fig. 2 is a front view of the sidebeam provided by the embodiment of the present disclosure. Fig. 3 is another front view of the sidebeam provided by the embodiment of the present disclosure. Fig. 4 is a schematic view of the sidebeam provided in the embodiment bearing a first vertical load. Fig. 5 is a schematic view of the sidebeam provided in the embodiment bearing a second vertical load.

As shown in Figs. 1 to 5, the sidebeam 1 of the bogie frame provided in the embodiment is a double-layer sidebeam, including a main sidebeam plate 11, an auxiliary sidebeam plate 12, and an elastic stopper 13. The main sidebeam plate 11 and the auxiliary sidebeam plate 12 are made of elastic composite fiber material, which has the advantages of lightweight, elastic deformation, and the like.

The main sidebeam plate 11 and the auxiliary sidebeam plate 12 are stacked, and are symmetrical laterally as shown in Fig. 2. The auxiliary sidebeam plate 12 is stacked above the main sidebeam plate 11. The middle bottom surface of the auxiliary sidebeam plate 12 is in contact with the top surface of the main sidebeam plate 11. Two ends of the auxiliary sidebeam plate 12 are suspended, i.e. there is a buffer gap 14 between the bottom surfaces of two ends of the auxiliary sidebeam plate 12 and the top surface of the main sidebeam plate 11.

An elastic stopper 13 is provided at the end of the auxiliary sidebeam plate 12 and is located in the buffer gap 14. In a case where the sidebeam is not subjected to a vertical load, there is a certain gap between the elastic stopper 13 and the upper surface of the main sidebeam plate 11. In a case where the middle portion of the sidebeam is subjected to the first vertical load, the main sidebeam plate 11 is slightly elastically deformed, and there is a gap between the elastic stopper 13 and the top surface of the main sidebeam plate 11, as shown in Fig. 4. In a case where the middle portion of the sidebeam is subjected to a larger second vertical load, the main sidebeam plate 11 and the auxiliary sidebeam plate 12 have larger elastic deformation, and the middle portions of the main sidebeam plate 11 and the auxiliary sidebeam plate 12 are pressed and moved downward, and two ends move upward and inward until the elastic stopper 13 is in contact with the top surface of the main sidebeam plate 11, as shown in Fig. 5.

The sidebeams are employed in the bogie frame and also include a crossbeam 2, a wheelset 3, a primary suspension device 4, and other components. The two sidebeams 1 are parallel to each other and extended in the longitudinal direction of the vehicle (also defined as the lengthwise direction), and the crossbeam 2 is extended in the transverse direction, which is perpendicular to the longitudinal direction. The crossbeam 2 is disposed below the two sidebeams 1, and the middle portion of the sidebeams 1 is connected to the crossbeam 2. The wheelset 3 is disposed below the end of the sidebeam 1, and includes a shaft 31, wheels 32 symmetrically disposed on the shaft 31, and a shaft box 33. A suspension device 4 is disposed above the shaft box 33 and between the shaft box 33 and the sidebeam 1. The end of the main sidebeam plate 11 is extended above the primary suspension device 4.

In a case where the vehicle is empty or full, the vehicle load is small, and the elastic stopper 13 is not in contact with the main sidebeam plate 11, as shown in Fig. 4. Only the main sidebeam plate 11 is bored with the vertical force and transmits to the primary suspension device 4, only the main sidebeam plate 11 has elastic deformation, and the auxiliary sidebeam plate 12 does not bear the force and does not provide support stiffness.

In a case where the vehicle is overloaded and the vehicle load is large, the auxiliary sidebeam plate 12 moves down, and the elastic stopper 13 is in contact with the main sidebeam plate 11, as shown in Fig. 5. At this time, the load of the vehicle is borne by the main sidebeam plate 11 and the auxiliary sidebeam plate 12 at the same time and provides vertical stiffness, which ensures that the support stiffness provided by the bogie frame increases with the increase of the load of the vehicle, so that the vibration amplitude of the carriage is in a small range under different load conditions, and the riding comfort is improved.

In the technical solution provided by the embodiment, the main sidebeam plate 11 and the auxiliary sidebeam plate 12 are stacked, the auxiliary sidebeam plate 12 is located above the main sidebeam plate 11, the middle portion of the auxiliary sidebeam plate 12 is in contact with the main sidebeam plate 11, there is a buffer gap 14 between the main sidebeam plate 11 and the two ends of the auxiliary sidebeam plate 12 suspended, and an elastic stopper 13 is disposed on the end of the auxiliary sidebeam plate 12 and inside the buffer gap 14. In a case where the sidebeam 1 is subjected to a small first vertical load, only the main sidebeam plate 11 has elastic deformation, and the elastic stopper 13 is contact with the main sidebeam plate 11. At this time, the main sidebeam plate 11 provides support stiffness. In a case where the sidebeam 1 is subjected to a larger second vertical load, the auxiliary sidebeam plate 12 moves down until the elastic stopper 13 to contact with the main sidebeam plate 11, so that the main sidebeam plate 11 and the auxiliary sidebeam plate 12 jointly provide support stiffness, so that the sidebeam 1 can provide different support stiffness, meet the requirements of different loads of vehicles, and improve riding comfort.

On the basis of the above technical solution, the embodiment provides an embodiment of the sidebeam 1:

As shown in Fig. 3, the main sidebeam plate 11 includes three sections defined as a main plate middle section 111, a main plate transition section 112, and a main plate connection section 113. The main plate transition section 112 and the main plate connection section 113 are extended from two ends of the main plate middle section 111 respectively. The main plate connection section 113 is located at the end of the main sidebeam plate 11.

The height of the main plate middle section 111 is lower than the height of the main plate connection section 113, and the main plate transition section 112 is connected between the main plate middle section 111 and the main plate connection section 113. The main plate transition section 112 has an oblique upward shape from the middle to the end of the main sidebeam plate 111. The main plate connection section 113 is adapted to connect to the primary suspension device.

The thickness of the main plate middle section 111 is larger than the thickness of the main plate connection section 113, thereby increasing the support strength of the main plate middle section 111. The thickness of the main plate transition section 112 gradually decreases in the direction from the main plate middle section 111 to the main plate connection section 113.

In a specific mode, the thickness of the main plate middle section 111 is uniform and is extended in the horizontal direction. The thickness of the main plate connection section 113 is uniform and is extended in the horizontal direction. The main plate transition section 112 is extended obliquely upward and has thickness gradually decreased in the direction from the main plate middle section 111 to the main plate connection section 113.

As shown in Fig. 3, the auxiliary sidebeam plate 12 includes an auxiliary plate middle section 121 an auxiliary plate transition section 122, and an auxiliary plate connection section 123. The auxiliary plate transition section 122 and the auxiliary plate connection section 123 respectively are extended from two ends of the auxiliary plate middle section 121.

The height of the auxiliary plate middle section 121 is lower than the height of the auxiliary plate connection section 123, and the auxiliary plate transition section 122 is connected between the auxiliary plate middle section 121 and the auxiliary plate connection section 123. In a specific mode, the thickness of the auxiliary plate middle section 121 is uniform and is extended in the horizontal direction. The thickness of the auxiliary plate transition section 122 may be uniformly provided or not uniformly provided and may be extended obliquely upward.

The auxiliary plate connection section 123 is located at the end of the auxiliary plate transition section 122 and is extended in the same direction as the auxiliary plate transition section 122. The vertical projection of the auxiliary board connection section 123 is on the main plate transition section 122, and the buffer gap 14 is formed between the auxiliary board connection section 123, the auxiliary board transition section 122, and the main plate transition section 112.

The elastic stopper 13 is provided at the auxiliary plate connection section 123, and in a case where the load on the sidebeam 1 is large, the elastic stopper 13 is in contact with the main plate transition section 112.

The elastic stopper 13 is a structure with a certain stiffness and a certain elastic buffer capacity. Specifically, the embodiment provides an elastic stopper 13 including a stopper block and a stopper connector. The stopper block includes a metal shell and a rubber block disposed inside the metal shell, and the rubber block and the metal shell form an integrated structure through the vulcanization process. One end of the stopper connector is connected to the metal shell, and the other end of the stopper connector is connected to the auxiliary sidebeam plate 12.

In the bogie frame provided by the embodiment, the sidebeam 1 is disposed above the crossbeam 2. The bottom surface of the main plate middle section 111 is provided with a first sidebeam positioning pin 15 for positioning with the crossbeam, and the first sidebeam positioning pin 15 is extended in a direction perpendicular to the main plate middle section 111. Correspondingly, a pin hole is provided on the crossbeam 2, and in the assembly process, the positioning between the crossbeam 2 and the sidebeam 1 is realized by inserting the first sidebeam positioning pin 15 into the pin hole of the crossbeam 2, so that there is no relative movement between the crossbeam 2 and the sidebeam 1 in the horizontal direction.

Both the main sidebeam plate 11 and the auxiliary sidebeam plate 12 are made of an elastic composite fiber material, which may be, for example, a carbon fiber composite material, a glass fiber composite material, or a carbon fiber and glass fiber composite material. On the basis of the above materials, other composite materials can also be added.

In a specific mode, the number of the first side member positioning pins 15 is two, and the first sidebeam positioning pins 15 are disposed on intervals along the longitudinal direction of the main sidebeam plate 11. The first sidebeam positioning pin 15 may be made of metal or a material having higher hardness. In a case where the first sidebeam positioning pin 15 is made of metal and the main sidebeam plate 11 is made of carbon fiber composite material, a metal member is pre-embedded in the bottom of the main sidebeam plate 11, the outer end of the metal member exposes the main sidebeam plate 11 and forms a flat plate structure, and the first sidebeam positioning pin 15 is fixed to the flat plate structure.

In addition, a second sidebeam positioning pin 16 is provided on the middle top surface of the auxiliary sidebeam plate 12 for positioning with the secondary suspension device of the bogie frame. The second sidebeam positioning pin 16 is extended in a direction perpendicular to the middle top surface of the auxiliary sidebeam plate 12. The number of the second sidebeam positioning pins 16 is two, and the second sidebeam positioning pins 16 are disposed on intervals along the longitudinal direction of the auxiliary sidebeam plate 12. The second sidebeam positioning pin 16 may be made of metal or a material having higher hardness. In a case where the second sidebeam positioning pin 16 is made of metal and the auxiliary sidebeam plate 12 is made of carbon fiber composite material, a positioning metal member 18 is pre-embedded in the bottom of the auxiliary sidebeam plate 12, the outer end of the positioning metal member 18 exposes the upper surface of the auxiliary sidebeam plate 12 and forms a flat plate structure, and the second sidebeam positioning pin 16 is fixed to the flat plate structure.

Further, the bottom surfaces of two ends of the main sidebeam plate 11 are provided with third sidebeam positioning pins 17 for positioning with the primary suspension device of the bogie frame. The third sidebeam positioning pins 17 are extended in a direction perpendicular to the bottom surface of the end of the main sidebeam plate 11. One of the third sidebeam positioning pin 17 is provided at each end of the main sidebeam plate 11. The third sidebeam positioning pin 17 may be made of metal or a material with higher hardness. In a case where the third sidebeam positioning pin 17 is made of metal and the main sidebeam plate 11 is made of carbon fiber composite material, a metal member can also be pre-embedded in the main sidebeam plate 11 with reference to the above mode, and the part of the metal member exposed from the bottom surface of the main sidebeam plate 11 is connected to the third sidebeam positioning pin 17.

The embodiment provides an implementation mode of a crossbeam 2:

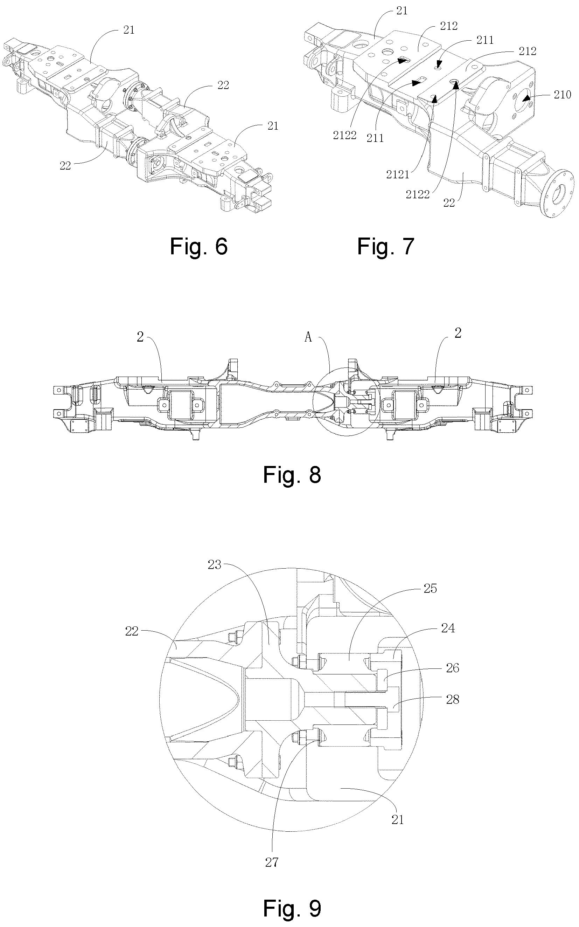

Fig. 6 is a perspective view of the crossbeam provided by the embodiment of the present disclosure, and Fig. 7 is a perspective view of the crossbeam single-structure provided by the embodiment of the present disclosure. As shown in Figs. 6 and 7, the crossbeam 2 includes two crossbeam single-structures disposed sequentially in the transverse direction and connected with each other to form the crossbeam 2.

The crossbeam single-structure includes a crossbeam main body 21 and a crossbeam connecting arm 22 both of which extended in the transverse direction. An inner end surface of the crossbeam main body 21 facing the other crossbeam main body 21 has a first mounting area and a second mounting area. One end of the crossbeam connecting arm 22 is fixed to the first mounting area and the other end is connected to a second mounting area in another crossbeam single-structure by a crossbeam connecting device. The crossbeam provided by the embodiment has a small size, is easy to manufacture, transport, and assemble, and can improve assembly efficiency.

The crossbeam is made of cast aluminum alloy or other lightweight materials, and the cast mold can be printed by additive manufacturing technology to reduce the weight.

As shown in Fig. 7, the width of the end of the crossbeam main body 21 facing the other crossbeam single-structure is larger than the width of the middle portion of the crossbeam main body 21. An end surface of the crossbeam main body 21 facing another crossbeam single-structure is defined as an inner end surface, and a first mounting area and a second mounting area are respectively located on the inner end surface of the crossbeam main body 21, specifically disposed on two ends along the width direction of the inner end surface.

A distance is kept between the first mounting area and the second mounting area, so that there is a gap between the two crossbeam connecting arms 22 for receiving the traction center pin in the traction device. The top of the traction center pin is connected to the car body, and the bottom of the traction center pin is inserted into the gap between the two crossbeam connecting arms 22 to transmit traction or braking force with the crossbeam 2.

For the connection between the two crossbeam single-structures a rigid connection may be adopted, for example, by bolting the crossbeam connecting arm 22 to the other beam body 21. Or the following mode provided by the embodiment can be adopted:

In an implementation mode: a crossbeam connecting pin is adopted, and two ends along the axial direction of the crossbeam connecting pin are respectively defined as a first end and a second end. The first end is connected to the crossbeam connecting arm 22, and the second end is inserted and fixed in the first pin hole opened in the second mounting area. The first end of the crossbeam connecting pin and the crossbeam connecting arm 22 can be bolted, welded, pressed, and installed, and the second end fixed in the second pin hole can be welded, pressed, and installed or bolted through gaskets.

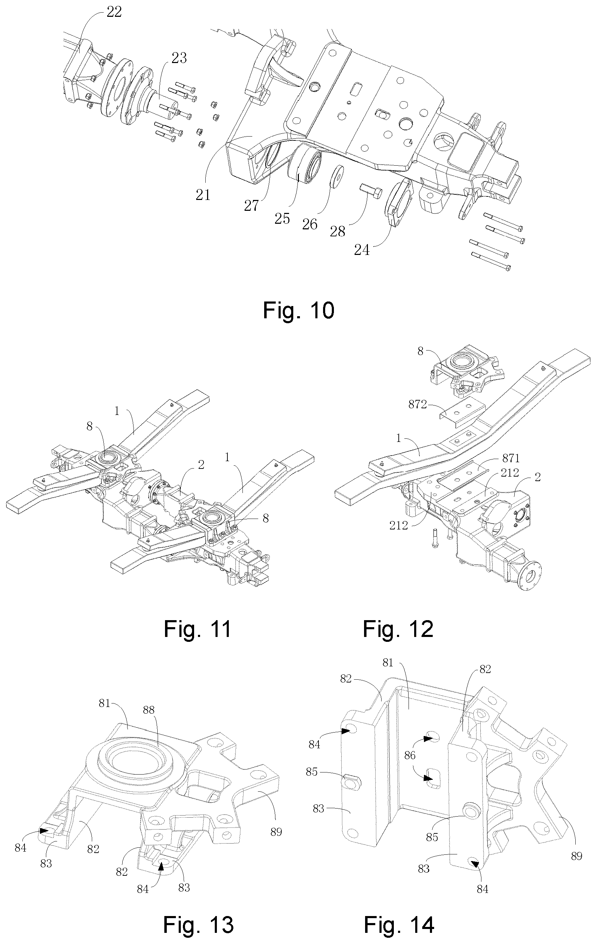

Another implementation mode: Fig. 8 is a sectional view of the crossbeam provided by the embodiment of the present disclosure, Fig. 9 is a partially enlarged view of the A area in Fig. 8, and Fig. 10 is an explosive view of the two crossbeams connected by the embodiment of the present disclosure. As shown in Figs. 8 to 10, the crossbeam connecting device includes a crossbeam connecting pin 23, a crossbeam connecting flange 24, a crossbeam connecting joint 25, and a crossbeam connecting gasket 26. The crossbeam connecting joint 25 has an annular structure, is press-fitted in the first pin hole 210, and is relatively fixed to the crossbeam main body 21. In Fig. 9, the axial direction of the crossbeam connecting joint 25 is extended in the left-right direction and the left end thereof is defined as a first end and the right end as a second end.

The second end of the crossbeam connecting pin 23 is press-fitted in the crossbeam connecting joint 25 and is relatively fixed to the crossbeam connecting joint 25. The crossbeam connecting gasket 26 is provided at the second end surface of the crossbeam connecting pin 23 and is coaxial with the crossbeam connecting pin 23. The outer diameter of the crossbeam connecting gasket 26 is larger than the inner diameter of the crossbeam connecting joint 25, and the inner diameter of the crossbeam connecting gasket 26 is smaller than the outer diameter of the crossbeam connecting pin 23. The second end of the crossbeam connecting pin 23 is provided with an internally threaded hole. After passing through the crossbeam connecting gasket 26 from the right side, the crossbeam connecting bolt 28 is screwed into and fixed to the internally threaded hole of the crossbeam connecting pin 23, thereby achieving a fixed connection between the crossbeam connecting pin 23 and the crossbeam connecting joint 25.

The crossbeam connecting flange 24 has a mounting outer ring and an inner ring, the inner ring is inserted into the first pin hole 210 and abuts against the axial second end of the crossbeam connecting joint 25, and the outer ring of the crossbeam connecting flange 24 is connected to the crossbeam main body 21 by bolts, thereby achieving a fixed connection between the crossbeam connecting joint 25 and the crossbeam main body 21.

Further, the crossbeam connecting device further includes at least one beam mounting ring 27 disposed in the first pin hole 210 and between the left end of the crossbeam connecting joint 25 and the crossbeam main body 21. In the assembly process, the crossbeam connecting pin 23 sequentially passes through at least one beam mounting ring 24, the crossbeam connecting joint 25 and the crossbeam connecting gasket 26 from the left side and is fixed to the crossbeam connecting bolt 28. The crossbeam mounting ring 27 adjusts the dimensional deviation between the crossbeam connecting joint 25 and the crossbeam main body 21. The number and thickness of the crossbeam mounting ring 27 can be designed according to the specific dimensional deviation, so that the crossbeam connecting joint 25 can be fixed in the crossbeam main body 21 to avoid relative movement and vibration of the crossbeam main body 21 during the operation of the vehicle.

The first end of the crossbeam connecting pin 23 is inserted in the second pin hole provided on the end surface of the crossbeam connecting arm 22, and the outer circumferential surface of the crossbeam connecting pin 23 is extended outward in the radial direction to form a mounting flange which is connected to the flange provided at the end of the crossbeam connecting arm 22 by bolts. The radial force between the crossbeam connecting pin 23 and the crossbeam connecting arm 22 is received by the end of the crossbeam connecting arm 22 inserted into the second pin hole, so that the bolt connected to the crossbeam connecting arm 22 is prevented from receiving shear force.

The assembly process of the crossbeam connecting device for connecting the crossbeam single-structure includes the following steps: firstly, the first end of the crossbeam connecting pin 23 is bolted to the crossbeam connecting arm 22, and then the crossbeam connecting pin 23 is connected to the crossbeam main body 21. The process of connecting the crossbeam connecting pin 23 to the crossbeam main body 21 is to insert the crossbeam mounting ring 27 into the first pin hole 210 of the crossbeam main body 21 according to the measured dimensional deviation, press-fit the crossbeam connecting joint 25, press-fit the crossbeam connecting pin 23 into the crossbeam connecting joint 25, place the crossbeam connecting gasket 26, place the crossbeam connecting bolt 28 through the crossbeam connecting gasket 26 and screw the crossbeam connecting pin 23 to fix, and finally, abut the crossbeam connecting flange 24 at the right end of the crossbeam connecting joint 25 and fix the crossbeam main body 21 by bolts.

The axial force, radial force, torsional force, and deflection deformation between two crossbeam single-structures are all borne by the crossbeam connecting joints 25.

Further, the crossbeam connecting joint 25 includes a metal shell, a metal inner ring, and a rubber block disposed therebetween. The rubber block is vulcanized with the metal shell and the metal inner ring to form an integrated structure, so that the crossbeam connecting joint 25 has certain deformation ability. With the crossbeam connecting joint 25 provided in the present embodiment, deflection of a certain angle can be generated between two crossbeam single-structures. For example, in a case where there is a pit under one side of the track and the bogie frame passes through this position, the wheels on both sides are restrained greatly by the conventional rigid crossbeam, which leads to the suspension of the wheels above the pit and easy derailment under the condition of lateral force. However, the flexible deflection is generated between the two crossbeam single-structures through the crossbeam connecting joint 25, so that the wheels above the pit are still attached to the track, and the driving safety is improved. Compared with the conventional rigid crossbeam, the crossbeam provided by the embodiment is applied to the bogie frame, and has better adaptability to complex and harsh lines, higher riding comfort, and higher safety.

The crossbeam of a conventional bogie frame is welded. There are many factors influencing the welding quality, such as ambient temperature, welding flux composition, welding temperature, etc. Poor welding quality will reduce the reliability of the bogie frame. In the embodiment, the bolt connection mode is adopted between the two crossbeam single-structures, so that the reliability is higher.

A sidebeam positioning pin hole 211 is provided on the middle top surface of the crossbeam main body 21 for passing through a first sidebeam positioning pin 15 provided at the bottom of the sidebeam 1 to restrict the horizontal movement of the sidebeam 1.

Further, the number of the first sidebeam positioning pins 15 is two. The number of sidebeam positioning pin holes 211 corresponds to two and are disposed in the longitudinal direction. One of the sidebeam positioning pin holes 211 is a circular hole and the other is an oblong circular hole extended in the longitudinal direction. Two first sidebeam positioning pins 15 at the bottom of the sidebeam 1 are inserted into the circular hole and the oblong hole respectively. In the manufacturing process, due to the existence of measuring tools, measuring methods, production equipment, and other factors, the distance between the two first sidebeam positioning pins 15 can have an actual deviation within the allowable range. If the assembly with the crossbeam cannot be finished on schedule due to the actual deviation, the production takt time can be affected, and the production progress can be delayed. By adopting the matching mode of the circular hole and oblong hole, the actual deviation between the two first sidebeam positioning pins 15 can be adapted, the assembly of the sidebeam 1 and the crossbeam 2 can be completed normally, and the production efficiency can be improved.

Two secondary mounting platforms 212 protruded from the top surface of the crossbeam main body 21 are provided on the top surface of the crossbeam main body 21. A recessed area formed between the two secondary mounting platforms 212 can receive the sidebeam 1, and a sidebeam positioning pin hole 211 is provided in the recessed area.

Further, two secondary suspension mounting seats 8 are provided, which are respectively covered over the sidebeam 1 and connected to the crossbeam 2. A mounting channel penetrating in the longitudinal direction is formed between the secondary suspension mounting seat 8 and the crossbeam 2, the sidebeam 1 is penetrated in the mounting channel, and the middle portion of the sidebeam 1 is located in the mounting channel. The sidebeam 1 and the crossbeam 2 are two independent structures. In the assembly process, the sidebeam is first placed at the installation position of the crossbeam 2, and then the secondary suspension mounting seat 8 is covered on the sidebeam 1 and assembled with the crossbeam 2.

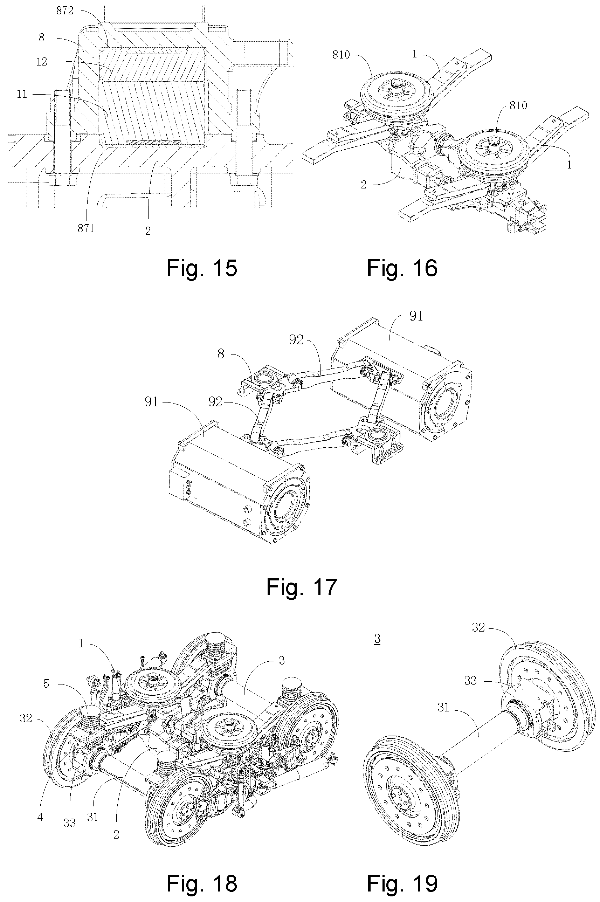

Specifically, Fig. 11 is a structural schematic view of the crossbeam, the sidebeam, and the secondary suspension mounting seat of the bogie frame provided by the embodiment of the present disclosure, Fig. 12 is an explosive view of the crossbeam, the sidebeam, and the secondary suspension mounting seat of the bogie frame provided by the embodiment of the present disclosure, Fig. 13 is a top view of the secondary suspension mounting seat provided by the embodiment of the present disclosure, Fig. 14 is a bottom view of the secondary suspension mounting seat provided by the embodiment of the present disclosure, and Fig. 15 is a partial sectional view of the assembly of the secondary suspension mounting seat, the sidebeam and the crossbeam provided by the embodiment of the present disclosure.

As shown in Figs. 11 to 15, the secondary suspension mounting seat 8 includes a mounting seat top plate 81 and a mounting seat side plate 82. The mounting seat top plate 81 is extended in the transverse direction and the top surface thereof to mount the secondary suspension device. The mounting seat side plates 82 are provided vertically and parallel to the longitudinal direction, and the number of the mounting seat side plates 82 is two. The top ends of the two mounting seat side plates 82 are respectively connected to two opposite edges of the mounting seat top plate 81. The bottom end of the mounting seat side plate 82 is bent outward to form a mounting seat connecting portion 83 which is fixedly connected to the secondary mounting platform 212.

Specifically, seat bolt holes 84 are provided at two ends of each mounting seat connecting portion 83, and secondary bolt holes 2121 are provided in the secondary mounting platform 212. The mounting seat connecting portion 83 is fixed to the secondary mounting platform 212 by connecting the mounting seat bolt holes 84 with bolts.

Further, a mounting seat positioning protrusion 85 is provided on the bottom surface of each mounting seat connecting portion 83, and the mounting seat positioning protrusion 85 on two of the mounting seat connecting portions 83 can be cylindrical. The secondary mounting platform 212 is correspondingly provided with secondary positioning holes 2122, one of which is a circular positioning hole and the other is an oblong positioning hole. One mounting seat positioning protrusion 85 is inserted into the circular positioning hole for accurate positioning, and the other mounting seat positioning protrusion 85 is inserted into the oblong positioning hole, which can adapt to the production deviation of the mounting seat positioning protrusion 85 and avoid the problem that the production takt time cannot be affected due to the production deviation.

Alternatively, the mounting seat positioning protrusion 85 on one of the mounting seat connecting portions 83 has a cylindrical shape, and the mounting seat positioning protrusion 85 on the other mounting seat connecting portion 83 has a long cylindrical shape. The secondary mounting platform 212 is provided with a circular positioning hole and an oblong positioning hole correspondingly, and a cylindrical mounting seat positioning protrusion 85 and a long cylindrical mounting seat positioning protrusion 85 are respectively inserted.

The lower surface of the mounting seat top plate 81 of the secondary suspension mounting seat 8 is provided with sidebeam positioning counterbore 86, the number and position of which correspond to the second sidebeam positioning pins 16. During assembly, the sidebeam 1 and the secondary suspension mounting seat 8 are positioned by inserting the second sidebeam positioning pin 16 into the sidebeam positioning counterbore 86.

On the basis of the above technical solution, the bogie frame can also be improved as follows. As shown in Fig. 12 and Fig. 15, a lower transition plate 871 is disposed between the sidebeam 1 and the crossbeam 2 to cushion the force between the sidebeam 1 and the crossbeam 2. Particularly in a case where the sidebeam 1 is made of an elastic fiber composite material the lower transition plate 871 can reduce the wear of the sidebeam 1 and ensure the strength of the sidebeam 1.

Specifically, the lower transition plate 871 may be a plate-like structure parallel to the horizontal plane. Further, two sides of the lower transition plate 871 are extended upward to two sides of the sidebeam 1 and wrap the sidebeam 1. The lower transition plate 871 is provided with a through hole through which the first sidebeam positioning pin 15 passes.

Further, an upper transition plate 872 is provided between the sidebeam 1 and the secondary mounting seat 8. The force between the sidebeam 1 and the secondary mounting seat 8 is cushioned. Particularly in a case where the sidebeam 1 is made of an elastic fiber composite material the upper transition plate 872 can reduce the wear of the sidebeam 1 and ensure the strength of the sidebeam 1.

Specifically, the upper transition plate 872 may be a plate-like structure parallel to the horizontal plane. Further two sides of the upper transition plate 872 are extended downward to both sides of the sidebeam 1 and wrap the sidebeam 1. The upper transition plate 872 is correspondingly provided with a through hole through which the second sidebeam positioning pin 16 passes.

Fig. 16 is a structural schematic view of the bogie frame provided by the embodiment of the present disclosure in which a secondary suspension device is disposed. Further, the upper surface of the mounting seat top plate 81 is connected to the secondary suspension device. The secondary suspension device can be a rubber stack, steel spring or air spring. In the embodiment, an air spring 810 is employed as a secondary suspension device. As shown in Fig. 16, a secondary mounting portion 88 is provided on the upper surface of the mounting seat top plate 81, which is an annular structure protruded from the mounting seat top plate 81, and the center line of the secondary mounting portion 88 is extended in the vertical direction. The bottom of the air spring 810 is inserted in the secondary mounting portion 88 to locate the horizontal direction.

Fig. 17 is a structural schematic view of the secondary suspension mounting seat provided by the embodiment of the present disclosure, which is connected to the traction motor through the motor balancing link. As shown in Figs. 13, 14, and 17, the secondary suspension mounting seat 8 is further provided with a motor mounting portion 89 for connecting one end of the motor balancing link 92, and the other end of the motor balancing link 92 is connected to the shell of the traction motor 91 provided on the wheelset 3. The traction motor 91 is a direct driver, which is connected to the shaft 31 in the wheelset 3 and directly drives the shaft 31 to rotate, thus driving the wheels 32 to rotate.

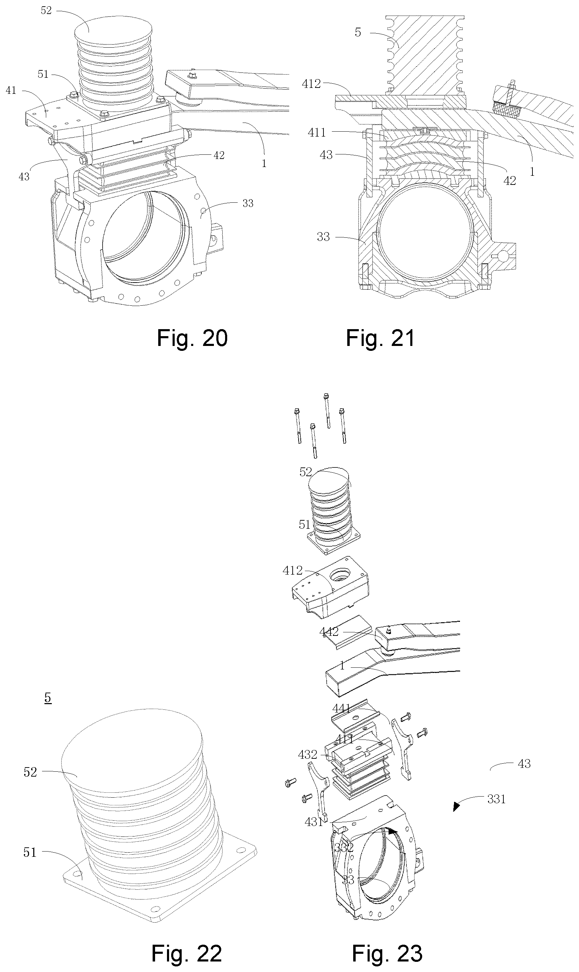

Fig. 18 is a structural schematic view of the bogie frame provided by the embodiment of the present disclosure, Fig. 19 is a structural schematic view of the wheelset in the bogie frame provided by the embodiment of the present disclosure, and Fig. 20 is a partial schematic view of the bogie frame provided by the embodiment of the present disclosure with a safety stopper device. As shown in Figs. 18 to 20, the bogie frame provided in the embodiment includes the sidebeam 1, the crossbeam 2, the wheelset 3, and the primary suspension device 4.

The number of wheelsets 3 is two, which are arranged on two sides of the crossbeam 2 and located below the end of the sidebeam 1. The wheelset 3 includes an shaft 31, wheels 32, and an shaft box 33. The number of wheels 32 is two, which are symmetrically disposed on the shaft 31. The number of shaft boxes 33 is two, which are symmetrically disposed on the shaft 31. The shaft box 33 can be located inside or outside the wheels 32. In the embodiment, the shaft box 33 is located inside the wheels 32 as an example.

The primary suspension device 4 is provided between the sidebeam 1 and the shaft box 33 for transmitting a vertical force between the sidebeam 1 and the shaft box 33, and also for buffering vibration between the shaft box 33 and the sidebeam 1. The first suspension device has certain stiffness and elastic deformation ability, and the elastic deformation direction is extended vertically.

In addition, the bogie frame provided in the embodiment also includes a safety stopper device 5, which is disposed on the top of the primary suspension device 4, and there is a gap between the safety stopper device 5 and the car body during the normal operation of the vehicle. In a case where the sidebeam 1 fails, the car body falls on the safety stopper device 5, and the safety stopper device 5 is bearing the car body load.

According to the technical solution, the primary suspension device is disposed between the sidebeam and the shaft box, and the safety stopper device is disposed on the top of the primary suspension device. In a case where the sidebeam fails, the car body falls on the safety stopper device, and the safety stopper device is bored with the weight load of the car body, thus protecting the normal operation of the shaft and improving the operation safety.

On the basis of the above technical solution, the embodiment specifically discloses the implementation mode of the bogie frame: the safety stopper device 5 has certain rigidity and can bear the weight load of the car body. For example, the safety stopper device 5 is made of a rigid material.

Alternatively, the safety stopper device 5 may have a certain elastic cushioning capacity while having a certain stiffness and can buffer vibration between the car body and the shaft box.

Fig. 21 is a sectional view of the bogie frame provided by the embodiment of the present disclosure with a safety stopper device, Fig. 22 is a structural schematic view of the safety stopper device provided by the embodiment of the present disclosure, and Fig. 23 is an explosive view of the assembly of the safety stopper device, the primary suspension device and the shaft box provided by the embodiment of the present disclosure. As shown in Figs. 21 to 23, in the present embodiment, the safety stopper device 5 includes a safety stopper seat 51 and a safety stopper 52. The safety stopper 52 is fixed to the safety stopper seat 51 mounted to the top of the primary suspension device 4. The safety stopper 52 has a certain elastic deformation capability, and the elastic deformation direction of the safety stopper 52 is extended in the vertical direction, i.e. has the same elastic deformation direction as the primary suspension device 4.

In another specific implementation, the safety stopper 52 includes a plurality of metal layers and a plurality of rubber layers disposed in a stack, and the rubber layer is disposed between two adjacent metal layers. The metal layer and the rubber layer form an integrated structure through the vulcanization process. The metal layer at the bottom is in contact with the safety stopper seat 51. The rubber layer has a certain elastic buffer capacity, and the metal layer has a certain stiffness to bear the weight load of the car body.

The embodiment provides a concrete implementation mode of a primary suspension device 4. The primary suspension device 4 includes a primary suspension mounting seat 41 and a primary suspension 42. The primary suspension 42 is disposed on the top of the shaft box 33, and a primary positioning post is disposed on the bottom of the primary suspension 42, which is correspondingly inserted into the primary positioning hole 331 disposed on the top of the shaft box 33 for restricting the horizontal movement of the primary suspension 42.

The primary suspension mounting seat 41 is provided at the top of the primary suspension 42, and a safety stopper seat 51 in the safety stopper device 5 is mounted on the primary suspension mounting seat 42. A receiving space for receiving the end of the sidebeam 1 is provided in the primary suspension mounting seat 41, and the end of the sidebeam 1 penetrates into the receiving space.

In a specific implementation mode, the primary mounting seat 41 is formed by covering and connecting a lower mounting seat 411 with an upper mounting seat 412, and the receiving space is formed between the lower mounting seat 411 and the upper mounting seat 412. Specifically, the lower mounting seat 411 is made of a metal material and is vulcanized with rubber on the top of the primary suspension 42 to form an integral structure. The upper mounting seat 411 is fixedly connected to the upper mounting seat 412 by bolts.

In a specific implementation mode, bolt holes are provided corresponding to the safety stopper seat 51, the upper mounting seat 412, and the lower mounting seat 411, and bolts are passed through the safety stopper seat 51, the upper mounting seat 412, and the lower mounting seat 411 sequentially from top to fix the three seats.

The upper mounting seat 412 is provided with a weight reduction hole, which can reduce the weight of the primary suspension device 4, thereby reducing the dead weight of the bogie frame and improving the traction efficiency of the railway vehicle. The weight reduction hole is a circular hole provided on the upper mounting seat 412, and the center line is extended vertically.

Further, a wheelset lift 43 is provided, the top end of which is connected to the primary suspension mounting seat 41 and the bottom end of which is connected to the shaft box 33, so as to restrict the vertical movement of the primary suspension 42 and prevent the primary suspension 42 from being separated from the shaft box 33 due to vertical movement.

In a specific implementation mode, the top of the shaft box 33 is planar, and two primary positioning holes 331 are disposed on the middle of the top of the shaft box 33 and disposed on intervals in the longitudinal direction. A limiting edge is extended in a direction perpendicular to the center line of the shaft box (i.e., the longitudinal direction), and a limiting recess 332 is formed on the limiting edge. The bottom end of the wheelset lift 43 is extended to two sides to form a limiting stopper protrusion 431. The wheelset lift 43 may be fitted in the limiting recess 332, and the limiting stopper protrusion 431 is restricted below the limiting edge. The limiting edge prevents the wheelset lift 43 from moving upward.

Further, two connecting arms 432 are diverged upward from the middle portion of the wheelset lift 43 and are respectively connected to the end surfaces of the lower mounting seat 411.

The embodiment provides a specific implementation mode: the wheelset lift 43 has a "Y" shaped structure. In the assembly process, the middle portion of the wheelset lift 43 is inserted into the limiting recess 332, the two connecting arms 432 at the top of the wheelset lift 43 are respectively connected to the longitudinal end surface of the lower mounting seat 411 through bolts, and the limiting stopper protrusion 431 at the bottom is located below the limiting edge.

Each of the longitudinal ends of the lower mounting seat 411 is provided with a wheelset lift 43, and the longitudinal movement of the wheelset lift 43 is restricted by bolting to the wheelset lift 43, and the shaft box 33 restricts the vertical movement of the wheelset lift 43. With the above-mentioned embodiments, the vertical movement of the primary suspension 42 is restricted so as to avoid being separated from the shaft box 33 due to excessive movement.

The wheelset lift 43 can also play an auxiliary lifting role in a case where hoisting the bogie frame. Specifically, during the hoisting process, the sidebeam moves upward, and the wheelset is driven to move upward by the primary suspension mounting seat and the wheelset lift 43.

The sidebeam 1 provided in the embodiment can be made of a composite material, such as a carbon fiber composite material, so that the sidebeam 1 has a certain flexibility and improves the adaptability to the car body load. On this basis, a lower pad plate 441 may be provided between the sidebeam 1 and the lower mounting seat 411, and two sides of the lower pad plate 441 are extended upwardly to the bottom surface higher than the end of the sidebeam 1 to cover the side surface of the sidebeam 1. The lower pad plate 441 can reduce the wear of the sidebeam 1.

An upper pad plate 442 is provided between the sidebeam 1 and the upper mounting seat 412, and two sides of the upper pad plate 442 are extended downward to the top surface lower than the end of the sidebeam 1 and cover the side surface of the sidebeam 1. The upper pad plate 442 can reduce the wear of the sidebeam 1.

In addition, the embodiment also provides a railway vehicle, which includes the bogie frame provided by any of the above disclosure. A railway vehicle includes a plurality of carriages connected in series, and a bogie frame is disposed below the carriages. The bogie frame and the railway vehicle provided by the embodiment have the same technical advantages as the sidebeam.

## Claims

1. A sidebeam (1) of a bogie frame, comprising:
a main sidebeam plate (11) made of elastic composite fiber material;
an auxiliary sidebeam plate (12) made of elastic composite fiber material and stacked above the main sidebeam plate (11); wherein a middle bottom surface of the auxiliary sidebeam plate (12) is in contact with a top surface of the main sidebeam plate (11);
**characterized in that**
a buffer gap (14) is formed between the bottom surfaces of two ends of the auxiliary sidebeam plate (12) and the top surface of the main sidebeam plate (11);
the sidebeam (1) further comprises an elastic stopper (13) disposed on two ends of the auxiliary sidebeam plate (12) and located in the buffer gap (14);
in case where a middle portion of the sidebeam (1) bears a first vertical load, a gap is formed between the elastic stopper (13) and the top surface of the main sidebeam plate (11); in case where the middle portion of the sidebeam (1) bears a second vertical load, an elastic deformation is formed between the main sidebeam plate (11) and the auxiliary sidebeam plate (12) until the elastic stopper (13) in contact with the top surface of the main sidebeam plate (11); and the second vertical load is larger than the first vertical load; and
the first vertical load and the second vertical load are from the auxiliary sidebeam plate (12) to press downwardly.

2. The sidebeam (1) according to claim 1, wherein the main sidebeam plate (11) includes a main plate middle section (111), a main plate transition section (112), and a main plate connection section (113) respectively extended from two ends of the main plate middle section (111); and
a height of the main plate middle section (111) is lower than a height of the main plate connection section (113), and the main plate transition section (112) is connected between the main plate middle section (111) and the main plate connection section (113).

3. The sidebeam (1) according to claim 2, wherein a thickness of the main plate middle section (111) is larger than a thickness of the main plate connection section (113); and
the thickness of the main plate transition section (112) gradually decreases in the direction from the main plate middle section (111) to the main plate connection section (113).

4. The sidebeam (1) according to claim 2, wherein the auxiliary sidebeam plate (12) includes: an auxiliary plate middle section (121), an auxiliary plate transition section (122), and an auxiliary plate connection section (123) respectively extended from two ends of the auxiliary plate middle section (121); and
a height of the auxiliary plate middle section (121) is lower than a height of the auxiliary plate connection section (123), the auxiliary plate transition section (122) is connected between the auxiliary plate middle section (121) and the auxiliary plate connection section (123), and the elastic stopper (13) is disposed on the auxiliary plate connection section (123).

5. The sidebeam (1) according to claim 4, wherein a vertical projection of the auxiliary plate connection section (123) is on the main plate transition section (112), and the buffer gap (14) is formed between the auxiliary plate connection section (123), the auxiliary plate transition section (122) and the main plate transition section (112).

6. The sidebeam (1) according to any one of claims 1-5, wherein the elastic stopper (13) includes: a stopper block and a stopper connector; and
the stopper block includes a metal shell and a rubber block disposed in the metal shell, the rubber block and the metal shell form an integrated structure through a vulcanization process, one end of the stopper connector is connected to the metal shell, and the other end of the stopper connector is connected to the auxiliary sidebeam plate (12).

7. The sidebeam (1) according to any one of claims 1-6, wherein a middle bottom surface of the main sidebeam plate (11) is provided with a first sidebeam positioning pin (15) for positioning with a crossbeam (2) of a bogie frame, and the first sidebeam positioning pin (15) is extended in a direction perpendicular to the main sidebeam plate (11).

8. The sidebeam (1) according to any one of claims 1-7, wherein a middle top surface of the auxiliary sidebeam plate (12) is provided with a second sidebeam positioning pin (16) for locating with a secondary suspension device of a bogie frame.

9. The sidebeam (1) according to claim 8, wherein the second sidebeam positioning pin (16) is fixed to the middle upper surface of the auxiliary sidebeam plate (12) by a locating metal member, the number of the second sidebeam positioning pins (16) is two, and the second sidebeam positioning pins (16) are disposed on intervals along the longitudinal direction of the auxiliary sidebeam plate (12) and extended in a direction perpendicular to the middle upper surface of the auxiliary sidebeam plate (12).

10. The sidebeam (1) according to any one of claims 1-9, wherein the bottom surfaces of two ends of the main sidebeam plate (11) are provided with third sidebeam positioning pins (17) for positioning with a primary suspension device (4) of a bogie frame, and the third sidebeam positioning pins (17) are extended in a direction perpendicular to the bottom surfaces of two end of the main sidebeam plate (11).

11. The sidebeam (1) according to any one of claims 1-10, wherein the elastic composite fiber material is a carbon fiber composite material, a glass fiber composite material, or a carbon fiber and glass fiber composite material.

12. A bogie frame comprising: a sidebeam (1) according to any one of claims 1 to 11.

13. A railway vehicle comprising: a bogie frame according to claim 12.

## Patentansprüche

1. Längsträger (1) eines Drehgestellrahmens, der aufweist:
eine Hauptlängsträgerplatte (11), die aus elastischem Faserverbundwerkstoff besteht;
eine Hilfslängsträgerplatte (12), die aus elastischem Faserverbundwerkstoff besteht und über der Hauptlängsträgerplatte (11) gestapelt ist; wobei eine mittlere Unterseite der Hilfslängsträgerplatte (12) in Kontakt mit einer Oberseite der Hauptlängsträgerplatte (11) ist;
**dadurch gekennzeichnet, dass**
ein Pufferspalt (14) zwischen den Unterseiten von zwei Enden der Hilfslängsträgerplatte (12) und der Oberseite der Hauptlängsträgerplatte (11) ausgebildet ist;
der Längsträger (1) ferner einen elastischen Anschlag (13) aufweist, der an beiden Enden der Hilfslängsträgerplatte (12) angeordnet ist und sich im Pufferspalt (14) befindet;
in dem Fall, in dem ein mittlerer Teil des Längsträgers (1) eine erste vertikale Last trägt, ein Spalt zwischen dem elastischen Anschlag (13) und der Oberseite der Hauptlängsträgerplatte (11) ausgebildet ist; in dem Fall, in dem der mittlere Teil des Längsträgers (1) eine zweite vertikale Last trägt, eine elastische Verformung zwischen der Hauptlängsträgerplatte (11) und der Hilfslängsträgerplatte (12) ausgebildet ist, bis der elastische Anschlag (13) mit der Oberseite der Hauptlängsträgerplatte (11) in Kontakt ist; und die zweite vertikale Last größer ist als die erste vertikale Last; und
die erste vertikale Last und die zweite vertikale Last von der Hilfslängsträgerplatte (12) ausgehen, um nach unten zu drücken.

2. Längsträger (1) nach Anspruch 1, wobei die Hauptlängsträgerplatte (11) einen Hauptplatten-Mittelabschnitt (111), einen Hauptplatten-Übergangsabschnitt (112) und einen Hauptplatten-Verbindungsabschnitt (113) aufweist, die sich jeweils von den beiden Enden des Hauptplatten-Mittelabschnitts (111) erstrecken; und
eine Höhe des Hauptplatten-Mittelabschnitts (111) geringer ist als eine Höhe des Hauptplatten-Verbindungsabschnitts (113), und der Hauptplatten-Übergangsabschnitt (112) zwischen dem Hauptplatten-Mittelabschnitt (111) und dem Hauptplatten-Verbindungsabschnitt (113) verbunden ist.

3. Längsträger (1) nach Anspruch 2, wobei eine Dicke des Hauptplatten-Mittelabschnitts (111) größer ist als eine Dicke des Hauptplatten-Verbindungsabschnitts (113); und
die Dicke des Hauptplatten-Übergangsabschnitts (112) in Richtung vom Hauptplatten-Mittelabschnitt (111) zum Hauptplatten-Verbindungsabschnitt (113) allmählich abnimmt.

4. Längsträger (1) nach Anspruch 2, wobei die Hilfslängsträgerplatte (12) aufweist: einen Hilfsplatten-Mittelabschnitt (121), einen Hilfsplatten-Übergangsabschnitt (122) und einen Hilfsplatten-Verbindungsabschnitt (123), die sich jeweils von den beiden Enden des Hilfsplatten-Mittelabschnitts (121) erstrecken; und
eine Höhe des Hilfsplatten-Mittelabschnitts (121) geringer ist als eine Höhe des Hilfsplatten-Verbindungsabschnitts (123), der Hilfsplatten-Übergangsabschnitt (122) zwischen dem Hilfsplatten-Mittelabschnitt (121) und dem Hilfsplatten-Verbindungsabschnitt (123) verbunden ist, und der elastische Anschlag (13) auf dem Hilfsplatten-Verbindungsabschnitt (123) angeordnet ist.

5. Längsträger (1) nach Anspruch 4, wobei eine vertikale Projektion des Hilfsplatten-Verbindungsabschnitts (123) auf dem Hauptplatten-Übergangsabschnitt (112) liegt und der Pufferspalt (14) zwischen dem Hilfsplatten-Verbindungsabschnitt (123), dem Hilfsplatten-Übergangsabschnitt (122) und dem Hauptplatten-Übergangsabschnitt (112) ausgebildet ist.

6. Längsträger (1) nach einem der Ansprüche 1-5, wobei der elastische Anschlag (13) aufweist: einen Anschlagblock und einen Anschlagverbinder; und
der Anschlagblock ein Metallgehäuse und einen in dem Metallgehäuse angeordneten Gummiblock aufweist, wobei der Gummiblock und das Metallgehäuse durch einen Vulkanisationsprozess eine integrierte Struktur bilden, wobei ein Ende des Anschlagverbinders mit dem Metallgehäuse verbunden ist und das andere Ende des Anschlagverbinders mit der Hilfslängsträgerplatte (12) verbunden ist.

7. Längsträger (1) nach einem der Ansprüche 1-6, wobei eine mittlere Unterseite der Hauptlängsträgerplatte (11) mit einem ersten Längsträger-Positionierstift (15) zur Positionierung mit einem Querträger (2) eines Drehgestellrahmens versehen ist, und der erste Längsträger-Positionierstift (15) in einer Richtung senkrecht zur Hauptlängsträgerplatte (11) erstreckt ist.

8. Längsträger (1) nach einem der Ansprüche 1-7, wobei eine mittlere Oberseite der Hilfslängsträgerplatte (12) mit einem zweiten Längsträger-Positionierstift (16) versehen ist, der zur Positionierung mit einer sekundären Aufhängungsvorrichtung eines Drehgestellrahmens dient.

9. Längsträger (1) nach Anspruch 8, wobei der zweite Längsträger-Positionierstift (16) mittels eines metallischen Positionierelements an der mittleren Oberseite der Hilfslängsträgerplatte (12) befestigt ist, die Anzahl der zweiten Längsträger-Positionierstifte (16) zwei beträgt, und die zweiten Längsträger-Positionierstifte (16) in Abständen entlang der Längsrichtung der Hilfslängsträgerplatte (12) angeordnet sind und sich in einer Richtung senkrecht zur mittleren Oberseite der Hilfslängsträgerplatte (12) erstrecken.

10. Längsträger (1) nach einem der Ansprüche 1-9, wobei die Unterseiten von zwei Enden der Hauptlängsträgerplatte (11) mit dritten Längsträger-Positionierstiften (17) zur Positionierung mit einer primären Aufhängungsvorrichtung (4) eines Drehgestellrahmens versehen sind, und die dritten Längsträger-Positionierstifte (17) in einer Richtung senkrecht zu den Unterseiten der beiden Enden der Hauptlängsträgerplatte (11) erstreckt sind.

11. Längsträger (1) nach einem der Ansprüche 1-10, wobei der elastische Faserverbundwerkstoff ein Kohlefaserverbundwerkstoff, ein Glasfaserverbundwerkstoff oder ein Verbundwerkstoff aus Kohlefasern und Glasfasern ist.

12. Drehgestellrahmen, der aufweist: einen Längsträger (1) nach einem der Ansprüche 1 bis 11.

13. Schienenfahrzeug, das aufweist: einen Drehgestellrahmen nach Anspruch 12.

## Revendications

1. Longeron (1) d'un châssis de bogie, comprenant :
une plaque de longeron principale (11) en matériau composite à fibres élastique ;
une plaque de longeron auxiliaire (12) en matériau composite à fibres élastique et empilée au-dessus de la plaque de longeron principale (11) ; dans lequel une surface inférieure médiane de la plaque de longeron auxiliaire (12) est en contact avec une surface supérieure de la plaque de longeron principale (11) ;
**caractérisé en ce que**
un espace tampon (14) est formé entre les surfaces inférieures de deux extrémités de la plaque de longeron auxiliaire (12) et la surface supérieure de la plaque de longeron principale (11) ;
le longeron (1) comprend en outre une butée élastique (13) disposée sur deux extrémités de la plaque de longeron auxiliaire (12) et située dans l'espace tampon (14) ;
dans le cas où une partie médiane du longeron (1) supporte une première charge verticale, un jeu est formé entre la butée élastique (13) et la surface supérieure de la plaque de longeron principale (11) ; dans le cas où la partie médiane du longeron (1) supporte une seconde charge verticale, une déformation élastique se produit entre la plaque de longeron principale (11) et la plaque de longeron auxiliaire (12) jusqu'à ce que la butée élastique (13) soit en contact avec la surface supérieure de la plaque de longeron principale (11) ; et la seconde charge verticale est supérieure à la première charge verticale ; et
la première charge verticale et la seconde charge verticale proviennent de la plaque de longeron auxiliaire (12) pour presser vers le bas.

2. Longeron (1) selon la revendication 1, dans lequel la plaque de longeron principale (11) comprend une section médiane de plaque principale (111), une section de transition de plaque principale (112) et une section de raccordement de plaque principale (113) s'étendant respectivement depuis deux extrémités de la section médiane de plaque principale (111) ; et
une hauteur de la section médiane de plaque principale (111) est inférieure à une hauteur de la section de raccordement de plaque principale (113), et la section de transition de plaque principale (112) est raccordée entre la section médiane de plaque principale (111) et la section de raccordement de plaque principale (113).

3. Longeron (1) selon la revendication 2, dans lequel une épaisseur de la section médiane de plaque principale (111) est supérieure à une épaisseur de la section de raccordement de plaque principale (113) ; et
l'épaisseur de la section de transition de plaque principale (112) diminue progressivement dans la direction allant de la section médiane de plaque principale (111) à la section de raccordement de plaque principale (113).

4. Longeron (1) selon la revendication 2, dans lequel la plaque de longeron auxiliaire (12) comprend : une section médiane de plaque auxiliaire (121), une section de transition de plaque auxiliaire (122) et une section de raccordement de plaque auxiliaire (123) s'étendant respectivement depuis deux extrémités de la section médiane de plaque auxiliaire (121) ; et
une hauteur de la section médiane de plaque auxiliaire (121) est inférieure à une hauteur de la section de raccordement de plaque auxiliaire (123), la section de transition de plaque auxiliaire (122) est raccordée entre la section médiane de plaque auxiliaire (121) et la section de raccordement de plaque auxiliaire (123), et la butée élastique (13) est disposée sur la section de raccordement de plaque auxiliaire (123).

5. Longeron (1) selon la revendication 4, dans lequel une projection verticale de la section de raccordement de plaque auxiliaire (123) se trouve sur la section de transition de plaque principale (112), et l'espace tampon (14) est formé entre la section de raccordement de plaque auxiliaire (123), la section de transition de plaque auxiliaire (122) et la section de transition de plaque principale (112).

6. Longeron (1) selon l'une quelconque des revendications 1 à 5, dans lequel la butée élastique (13) comprend : un bloc de butée et un connecteur de butée ; et
le bloc de butée comprend une coque métallique et un bloc de caoutchouc disposé dans la coque métallique, le bloc de caoutchouc et la coque métallique forment une structure intégrée par un procédé de vulcanisation, une extrémité du connecteur de butée est reliée à la coque métallique, et l'autre extrémité du connecteur de butée est reliée à la plaque de longeron auxiliaire (12).

7. Longeron (1) selon l'une quelconque des revendications 1 à 6, dans lequel une surface inférieure médiane de la plaque de longeron principale (11) est pourvue d'un premier pion de positionnement de longeron (15) pour le positionnement avec une traverse (2) d'un châssis de bogie, et le premier pion de positionnement de longeron (15) s'étend dans une direction perpendiculaire à la plaque de longeron principale (11).

8. Longeron (1) selon l'une quelconque des revendications 1 à 7, dans lequel une surface supérieure médiane de la plaque de longeron auxiliaire (12) est pourvue d'un deuxième pion de positionnement de longeron (16) pour le positionnement avec un dispositif de suspension secondaire d'un châssis de bogie.

9. Longeron (1) selon la revendication 8, dans lequel le deuxième pion de positionnement de longeron (16) est fixé à la surface supérieure médiane de la plaque de longeron auxiliaire (12) par un organe métallique de positionnement, le nombre de deuxièmes pions de positionnement de longeron (16) est de deux, et les deuxièmes pions de positionnement de longeron (16) sont disposés à intervalles le long de la direction longitudinale de la plaque de longeron auxiliaire (12) et s'étendent dans une direction perpendiculaire à la surface supérieure médiane de la plaque de longeron auxiliaire (12).

10. Longeron (1) selon l'une quelconque des revendications 1 à 9, dans lequel les surfaces inférieures de deux extrémités de la plaque de longeron principale (11) sont pourvues de troisièmes pions de positionnement de longeron (17) pour le positionnement avec un dispositif de suspension primaire (4) d'un châssis de bogie, et les troisièmes pions de positionnement de longeron (17) s'étendent dans une direction perpendiculaire aux surfaces inférieures de deux extrémités de la plaque de longeron principale (11).

11. Longeron (1) selon l'une quelconque des revendications 1 à 10, dans lequel le matériau composite à fibres élastique est un matériau composite à fibres de carbone, un matériau composite à fibres de verre, ou un matériau composite à fibres de carbone et fibres de verre.

12. Châssis de bogie comprenant : un longeron (1) selon l'une quelconque des revendications 1 à 11.

13. Véhicule ferroviaire comprenant : un châssis de bogie selon la revendication 12.
